Europäisches Patentamt

European Patent Office

Office européen des brevets

(19)

(11) Publication number: **0 027 672**
**B1**

(12) **EUROPEAN PATENT SPECIFICATION**

(45) Date of publication of patent specification: **25.04.84**    (51) Int. Cl.³: **F 16 H   17/06**

(21) Application number: **80200968.8**

(22) Date of filing: **14.10.80**

(54) A method and apparatus for controlling an infinitely variable transmission.

(30) Priority: **19.10.79 NL 7907714**

(43) Date of publication of application:
**29.04.81 Bulletin 81/17**

(45) Publication of the grant of the patent:
**25.04.84 Bulletin 84/17**

(84) Designated Contracting States:
**AT BE CH DE FR GB IT LI LU NL SE**

(56) References cited:
**FR - A - 1 148 087**
**FR - A - 2 027 041**
**FR - A - 2 143 374**
**US - A - 4 152 947**

(73) Proprietor: **Van Doorne's Transmissie B.V.**
**Dr. Hub van Doorneweg 120 Postbus 500**
**NL-5026 RA  Tilburg (NL)**

(72) Inventor: **Cadee, Theodorus Petrus Maria**
**Pastoor de Beeckstraat 11**
**Goirle (NL)**

(74) Representative: **Louet Feisser, Arnold Abraham**
**Alfred**
**Postbus 500**
**NL-5000 AM  Tilburg (NL)**

Courier Press, Leamington Spa, England.

### A method and apparatus for controlling an infinitely variable transmission.

The invention relates to a method for controlling the transmission ratio of an infinitely variable V-belt transmission provided with a primary pulley and a secondary pulley, said pulleys having conical sheaves which are mutually axially displaceable by means of a primary hydraulic cylinder and a secondary hydraulic cylinder respectively wherein the transmission ratio is controlled by control means responsive to an internal signal depending on the input speed of the transmission and to an external signal, e.g. the position of a control cam.

United State patent no. 4,152,947 discloses such a method, wherein the transmission ratio of the transmission is set by means of a hydraulic pilot sleeve which on one side is loaded by a fluid pressure built up by means of a pitot tube in dependence of the input rotational speed. On the other side the pilot sleeve is loaded by a spring which is tensioned in dependence of an external control signal such as — in case of application in a motor vehicle — in the inlet manifold pressure or the position of throttle pedal or throttle valve of the engine. To this effect the control member tensioning the spring is connected for instance to a vacuum-operated cylinder or via a cam to the throttle pedal or throttle valve.

In the above, known method the transmission ratio of the transmission is always set in such a way that the engine speed (input speed of the transmission) assumes a given value, depending on the external control signal, e.g. on the position of the throttle pedal, and naturally in so far this is possible within the ratio range of the transmission.

Upon application in a motor vehicle, when one has to accelerate with a given acceleration, a certain motor power will be required. At a certain engine speed that motor power is established in the most efficient way. The transmission will then shift in such a way that certain engine speed is set and this engine speed will be maintained during the acceleration as long as the parameters defining the required engine speed do not change. In certain cases it has been found that it is desirable that the input speed (the speed of the drive motor) not only depends on an external control signal, wherein e.g. a required output power and specific conditions of the drive motor are incorporated.

Upon application in a motor vehicle the driveability may be improved by a control whereby in case of acceleration (increasing vehicle speed) the engine speed increases at for the rest constant parameters.

It is the object of the invention to provide a control for an infinitely variable transmission whereupon the shifting behaviour can be simply improved, in particular upon application in a motor vehicle.

To this effect according to the invention the fluid pressure in the secondary cylinder is used as a further signal to influence the transmission ratio.

It has been found that this secondary fluid pressure, which depends on the tension in the drive belt and the actual (i.e. set) transmission ratio, is a proper control signal the tension of the drive belt will have to be sufficiently large to effect the required frictional force between the drive belt and the pulleys. On the other hand this tension in general will be set not larger than required, since a larger tension of the drive belt will result in a decrease of the efficiency. With a substantially constant input torque (torque of the drive motor) the force to be transmitted by the drive belt is directly dependent on the running diameter of the drive belt in the primary pulley, so on the transmission ratio of the transmission. The tension of the drive belt will be so controlled that said tension decreases when changing to a higher gear (i.e. a lower transmission ratio), since thereby the force to be transmitted by the drive belt decreases. In practice it was found that, partly through dynamic effects, the fluid pressure in the secondary cylinder varies much stronger than the fluid pressure in the primary cylinder, which in the optimal condition varies only little. This secondary fluid pressure, which largely depends on the transmission ratio (also at constant fluid pressure in the primary cylinder) appears in practice a proper control signal.

With a transmission wherein the control means consist of a hydraulic pilot sleeve which is loaded on its ends respectively by forces depending on the internal and external signals, whereby in a motor vehicle the control cam (external signal) may be connected to the throttle pedal, according to a further feature of the invention, the further signal depending on the fluid pressure in the secondary cylinder, loads the pilot sleeve in a direction opposite to that of the external control signal.

The invention furthermore relates to an apparatus for controlling the transmission ratio of an infinitely variable V-belt transmission provided with a primary pulley and a secondary pulley, said pulleys having conical sheaves which are mutually axially displaceable by means of a primary hydraulic cylinder and a secondary hydraulic cylinder respectively, said apparatus according to the invention being characterized by setting means for influencing the transmission ratio dependent on the fluid pressure in the secondary cylinder.

According to a further feature of the invention, the setting means comprise a hydraulic fluid connection from said secondary hydraulic cylinder to a hydraulic pilot sleeve for controlling the transmission ratio, and means for loading said pilot sleeve dependent on fluid pressure of said fluid connection.

According to another feature of the invention the pilot sleeve controls fluid supply to and fluid discharge from the primary cylinder, said pilot sleeve being loaded on one end by a force depending on the speed of the primary pulley and on the other end by a force depending on an external signal, said setting means comprise means for reducing the latter force upon increasing fluid pressure in the secondary cylinder.

Thereby according to still another feature of the invention, the pilot sleeve is fitted with a coaxial piston which is displaceable depending on the fluid pressure in the secondary cylinder, said piston being adapted to displace a stop member through a piston rod, said stop member resting against a spring which on the other end rests against an actuation member which is displaceable by the external signal.

Thereby according to a further feature of the invention, the actuation member may likewise rest against a spring which directly loads the pilot sleeve. Through application of said second spring, a certain characteristic of the force exerted on the pilot sleeve can be obtained, as will be further explained.

Two embodiments of the control apparatus according to the invention will now be explained, by way of example, with reference to the accompanying drawings, wherein

Fig. 1 diagrammatically shows a first embodiment and

Fig. 2 shows the hydraulic pilot sleeve in a second embodiment.

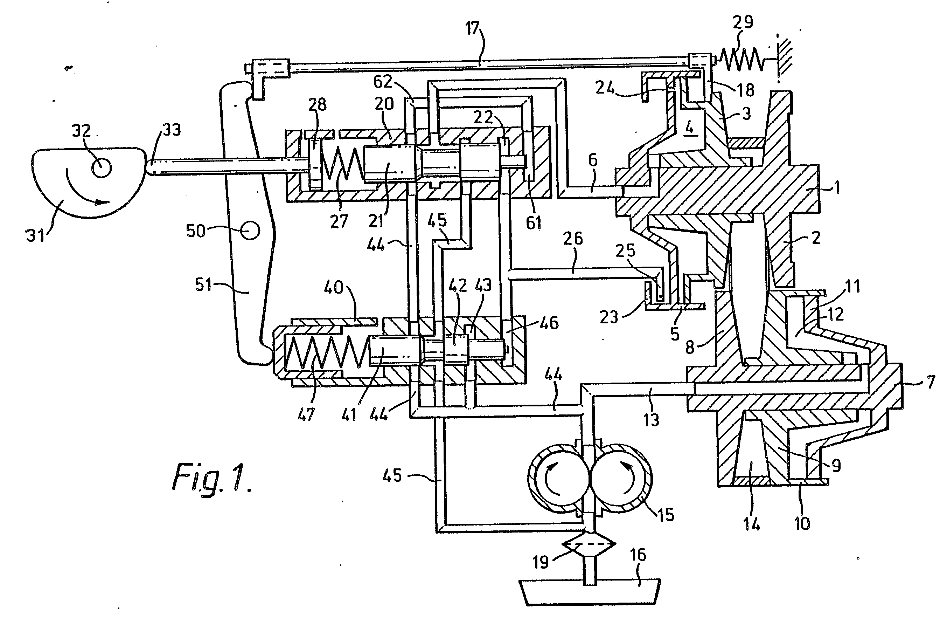

The embodiment diagrammaticaly shown in Fig. 1 comprises a primary or input shaft 1, provided with a fixed and an axially movable conical sheave 2, resp. 3, which together form the primary pulley.

Sheave 3 forms the piston of the cylinder 5 comprising the cylinder space 4 and can be axially displaced by fluid supply and discharge via line 6.

Furthermore, a secondary or output shaft 7 is provided, likewise fitted with a fixed and an axially movable conical sheave 8, resp. 9, which together constitute the secondary pulley. Sheave 9 is integrally connected to cylinder 10, wherein is disposed the piston 11 fixedly connected to the secondary shaft 7, so that cylinder space 12 is enclosed. Towards and from cylinder space 12, via line 13, fluid can be supplied or discharged.

About the primary and secondary pulley there is applied a V-shaped drive belt 14. This may be e.g. a reinforced or non-reinforced synthetic drive belt or a metal drive belt. Through axial displacement of the conical sheaves 3 and 9, the running diameters of the drive belt 14 about the two pulleys can be so changed that the difference in rotation speed of shafts 1 and 7 can be varied infinitely. The fluid pressures in cylinder spaces 4 and 12 moreover results in that the required tension force in the drive belt 14 is present.

Furthermore, the embodiment is provided with a fluid pump 15 for sucking fluid from a reservoir 16 via filter 19 and for pressurizing it.

For sensing the actual transmission ratio, there is provided a rod 17 which through sensing shoe 18, rests against the axially displaceable sheave 3, while loaded by tension spring 29. Depending on the transmission ratio, rod 17 is displaced an axial direction.

Furthermore, there is disposed an overflow valve 40 for controlling the fluid pressure pressurized by pump 15, which fluid pressure is also present in cylinder space 12. Valve 40 is fitted with an axially movable sleeve 41. Since the sleeve 41 is provided with an enlarged portion 42, which is in contact with the fluid in space 43 supplied by pump 15, the sleeve 41, upon increasing pumping pressure, will be displaced to the left (in the figure). In case of sufficient displacement of sleeve 41, the fluid in line 44 may flow back via line 45 to the low pressure side of pump 15.

Sleeve 41, which thus controls the pressure of the fluid pressurized by pump 15, is furthermore influenced by the input speed of shaft 1.

For sensing said speed, there is disposed on cylinder 5 a radially outwardly annular groove 23 which, via opening 24, is filled with fluid from cylinder space 4. The filling may naturally also be effected from the outside via a separate fluid supply line. By means of Pitot tube 25, the fluid in groove 23 rotating with the primary shaft 1 is converted into a fluid pressure, which via line 26 is passed on to space 36, wherein the fluid pressure is therefore dependent on the speed of the primary shaft 1. On the other end, sleeve 41 is loaded by the tension of spring 47, which is tensioned via rod 17 and the lever 51 rotating about point 50, depending on the actual transmission ratio. It will be clear that in this manner the tensioning force in the drive belt 14 is controlled through the fluid pressure in cylinder space 12, via depending on input speed and transmission ratio. Upon increasing transmission ratio (i.e. changing to lower gear) the pressure in cylinder space 12 will increase which is desired in connection with the required tension in the drive belt. This hydraulic control principle is further described in U.S. patent 4,152,947.

The transmission ratio of the infinitely variable transmission is controlled through valve 20 provided with an axially displaceable pilot sleeve 21. Pilot sleeve 21 is loaded on the one end by the fluid pressure in space 22, which fluid pressure depends on the primary or input speed of shaft 1, and by the fluid pressure in space 61, which space is in communication via lines 62, 44 and 13 with the secondary cylinder 12.

On the other end pilot sleeve 21 is loaded by the tensioning force of spring 27, which is tensioned through actuation member 28. To this effect, the actuation member 28 can be axially displaced by rotation about point 32 of cam 31 whereagainst cam follower 33 of actuation member 28 rests. The control of the transmission ratio is effected as follows. As long as the transmission is in a given transmission ratio (i.e. not the lowest or the highest transmission ratio whereby one of the axially displaceable sheaves 3 or 9 rests against a stop), pilot sleeve 21 is in an equilibrium situation wherein no fluid is discharged or supplied from or towards cylinder space 4. In this state of equilbrium of pilot sleeve 21, shown in fig. 1, the force of spring 27 is equal to the forces exerted on pilot sleeve 21 by the fluid in space 22 and space 61. The force of spring 27 (i.e. the rotation position of cam 31) consequently corresponds to a given combination of input speed (i.e. fluid pressure in space 22) and fluid pressure in the secondary cylinder space 12 (this is fluid pressure in space 61).

When at constant position of cam 31 (i.e. constant external control signal) the output speed (rotation speed of shaft 7) increases, the transmission will shift to a lower transmission ratio (i.e. a higher gear), since a proportional rise of the input speed (of shaft 1) results in an increased fluid pressure in space 22, which causes pilot sleeve 21 to be displaced to the left, so that via lines 44 and 6 fluid is conducted to cylinder space 4. This shifting continues until the equilibrium of pilot sleeve 21 is restored. During this shifting, however, also the fluid pressure in cylinder space 12 is changed, because rod 17 displaces axially thereby influencing valve 40.

As a result, there prevails in space 61 a lower fluid pressure if the transmission ratio is lower (i.e. a change into a higher gear has taken place). This reduction of the fluid pressure in space 61 is compensated by an increased fluid pressure in space 22, which has to be effected by an increased input speed. In the control shown in fig. 1, consequently, the input speed of the transmission will be determined by the position of cam 31, however, with a correction depending on the fluid pressure in the secondary cylinder space 12. This correction slightly increases the input speed upon increase of the output speed. This correction naturally takes place at each position of cam 31.

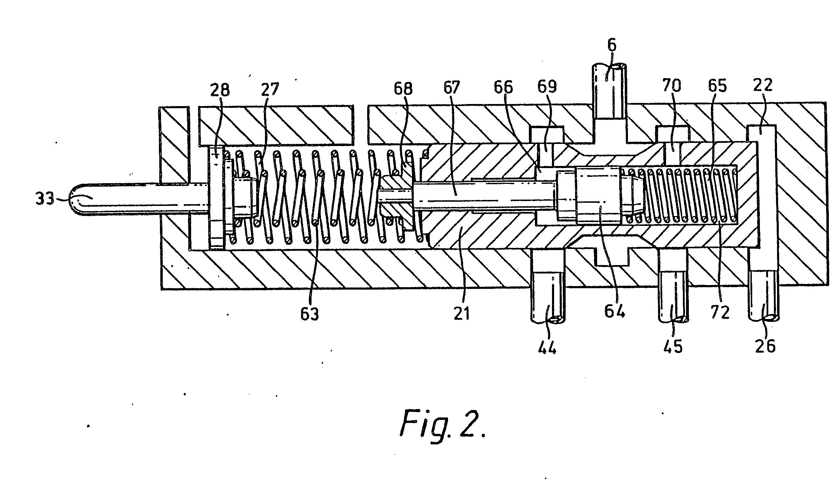

Fig. 2 shows diagrammatically a second embodiment of valve 20 shown in fig. 1. Pilot sleeve 21, according to the situation shown in fig. 1, is loaded on the one end via actuation member 28 and on the other end by the fluid pressure in space 22, depends on the input speed of the transmission. Depending on the position of pilot sleeve 21, sluid is steered via lines 44 and 6 to the primary cylinder or via lines 6 and 45 discharged from the primary cylinder.

In the equilibrium condition, the forces exerted jointly by springs 27 and 63 on pilot sleeve 21 are equal to the force exerted by the fluid pressure in space 22 on the pilot sleeve 21. The input speed of the transmission (i.e. the fluid pressure in space 22) consequently is determined by the force of springs 27 and 63. This force is substantially defined by the position of actuation member 28 (i.e. an external control signal), however, corrected by the position of piston 64, which is mounted coaxially in pilot sleeve 21. Said piston 64 is loaded on the one end by spring 65 and on the other end by the fluid pressure in space 66, which via lines 69 and 44 is in communication with the secondary cylinder space (compare fig. 1). Piston 64 is connected through piston rod 67 to stop 68 against which spring 63 rests.

Upon increasing fluid pressure in the secondary cylinder and hence in space 66, piston 64 will be displaced relatively to the right, so that the tensioning force of spring 63 decreases. The influence of the piston of actuation member 28 on the pilot sleeve 21 is thereby corrected in dependence of the fluid pressure in the secondary cylinder, similarly as explained in respect of fig. 1.

Through application of two springs 27 and 63, of which only one is influenced by the fluid pressure in the secondary cylinder, the possibilities are increased to effect a desired relation between the position of actuation member 28 and the force exerted on pilot sleeve 21. It is then possible, in case of a low input speed, whereby actuation member 28 is in the extreme left position, to eliminate the influence of spring 63 by limiting the maximal length thereof. As a result, a fixed minimal input speed over the entire range of transmission ratios can be set, which may be important for utilizing a given, minimally allowable speed of the drive motor over the entire range of transmission ratios.

Upon application in a motor vehicle, a control of the transmission ratio can thus be achieved, whereby, upon a slow acceleration, a fixed low engine speed is set, but upon a quicker acceleration, at a higher engine speed, said speed increases upon increasing vehicle speed.

Fig. 2 shows a line 70 which connects the space 72 wherein spring 65 is accommodated, to line 45, so that in space 72 there always prevails a low fluid pressure. It is also possible to connect space 72 to space 22, so that in space 72 prevails a pressure that depends on the input speed of the transmission, which may have a favourable effect on the control behaviour, since the correcting effect of piston 64 is increased. As appears from the above, the input speed (= speed of the drive motor) is increased by displacement of piston 64 the left as a result of a pressure decrease in space 66. This increase of the input speed results in an increased fluid pressure in space 22. Through connection of spaces 22 and 72, said pressure increase will also prevail in space 72, which results in a further displacement of piston 64 to the left and hence a further increase of the input speed of the transmission.

## Claims

1. Method of controlling the transmission ratio of an infinitely variable V-belt transmission provided with a primary pulley (2, 3) and a secondary pulley (8, 9), said pulleys having conical sheaves which are mutually axially displaceable by means of a primary hydraulic cylinder (5) and a secondary hydraulic cylinder (10) respectively wherein the transmission ratio is controlled by control means (21) responsive to an internal signal depending on the input speed of the transmission and an external signal, e.g. the position of a control cam, characterized in that the fluid pressure in the secondary cylinder is used as a further signal to influence the transmission ratio.

2. Method according to claim 1, wherein the control means consists of a hydraulic pilot sleeve (21) which is loaded on its ends respectively by forces depending on the internal and external signals, characterized in that the further signal loads the pilot sleeve in a direction opposite to that of the external signal.

3. Apparatus for controlling the transmission ratio of an infinitely variable V-belt transmission provided with a primary pulley (2, 3) and a secondary pulley (8, 9), said pulleys having conical sheaves which are mutually axially displaceable by means of a primary hydraulic cylinder (5) and a secondary hydraulic cylinder (10) respectively wherein the transmission ratio is controlled by control means (21) responsive to an internal signal depending on the input speed of the transmission and to an external signal, e.g. the position of a control cam, characterized by setting means for influencing the transmission ratio dependent on the fluid pressure in the secondary cylinder (10).

4. Apparatus according to claim 2, characterized in that said setting means comprise a hydraulic fluid connection (13, 44, 62) from said secondary hydraulic cylinder (10) to a hydraulic pilot sleeve (21) for controlling the transmission ratio, and means (61) for loading said pilot sleeve dependent on fluid pressure of said fluid connection.

5. Apparatus according to claim 4, characterized in that said pilot sleeve (21) controls fluid supply to and fluid discharge from the primary cylinders (5), said pilot sleeve (21) being loaded on one end by a force depending on the speed of the primary pulley (2, 3) and on the other end by a force depending on an external signal (31), said setting means comprise means for reducing the latter force upon increasing fluid pressure in the secondary cylinder (10).

6. Apparatus according to claim 5, characterized in that the pilot sleeve (21) is fitted with a coaxial piston (64) which is displaceable depending on the fluid pressure in the secondary cylinder (10), said piston (64) being adapted to displace a stop member (68) through a piston rod (67), said stop member (68) resting against a spring (63) which on the other end rests against an actuation member (33) which is displaceable by the external signal (31).

7. Apparatus according to claim 6, characterized in that the actuation member (33) likewise rests against a spring (27) which directly loads the pilot sleeve (21).

## Patentansprüche

1. Verfahren zur Steuerung des Uebersetzungsverhältnisses eines stufenlosen V-Riemen-Getriebes, das mit einer primären Riemenscheibe (2, 3) und einer sekundären Riemenscheibe (8, 9) versehen ist, die konische Scheiben haben, welche mittels ines primären Hydraulikzylinders (5) bzw. eines sekundären Hydraulikzylinders (10) wechselseitig axial verschiebbar sind, wobei das Uebersetzungsverhältnis durch Steuermittel (21) gesteuert ist, die auf ein internes Signal, das von der Eingangsdrehzahl des Getriebes abhängt, und auf ein externes Signal, z.B. die Stellung eines Steuernockens, ansprechen, dadurch gekennzeichnet, dass der Flüssigkeitsdruck im sekundären Zylinder als ein weiteres Signal zur Beeinflussung des Uebersetzungsverhältnisses verwendet wird.

2. Verfahren nach Anspruch 1, bei dem die Steuermittel aus einem Hydraulikpilotschieber (21) bestehen, der an seinen Enden durch vom intemen bzw. externen Signal abhängige Kräfte belastet ist, dadurch gekennzeichnet, dass das weitere Signal den Pilotschieber in einer Richtung belastet, die der des externen Signals entgegengesetzt ist.

3. Vorrichtung zur Steuerung des Uebersetzungsverhältnisses eines stufenlosen V-Riemen-Getriebes, das mit einer primären Riemenscheibe (2, 3) und einer sekundären Riemenscheibe (8, 9) versehen ist, die konische Scheiben haben, welche mittels eines primären Hydraulikzylinders (5) bzw. eineš sekundären Hydraulikzylinders (10) wechselseitig axial verschiebbar sind, wobei das Uebersetzungsverhältnis durch Steuermittel (21) gesteuert ist, die auf ein internes Signal, das von der Eingangsdrehzahl des Getriebes abhängt, und auf eine externes Signal, z.B. die Stellung eines Steuernockens, ansprechen, gegennzeichnet durch Einstellmittel zur Beeinflussung des Uebersetzungsverhältnisses in Abhängigkeit vom Flüssigkeitsdruck im sekundären Zylinder (10).

4. Vorrichtung nach Anspruch 2, dadurch gekennzeichnet, dass die Einstellmittel eine Verbindung (13, 44, 62) für die hydraulische Flüssigkeit vom sekundären Hydraulikzylinder (10) zu einem Hydraulikpilotschieber (21) zur Steuerung des Uebersetzungsverhältnisses und Mittel (61) zur Belastung dieses Pilotschiebers in Abhängigkeit vom Flüssigkeitsdruck in dieser Verbindung für die Flüssigkeit aufweisen.

5. Vorrichtung nach Anspruch 4, dadurch gekennzeichnet, dass der Pilotschieber (21) die Flüssigkeitszufuhr zum und Flüssigkeitsableitung vom primären Zylinder (5) steuert, und dass der Pilotschieber (21) an einem Ende durch eine Kraft, die von der Drehzahl der primären Riemenscheibe (2, 3) abhängt, und am anderen Ende durch eine Kraft, die von externen Signal (31) abhängt, belastet ist, und dass Einstellmittel Mittel zur Herabsetzung der letzteren Kraft bei Zunahme des Flüssigkeitsdruckes im sekundären Zylinder (10) aufweisen.

6. Vorrichtung nach Anspruch 5, dadurch gekennzeichnet, dass der Pilotschieber (21) mit einem koaxialen Kolben (64) ausgerüstet ist, der abhängig vom Flüssigkeitsdruck im sekundären Zylinder (10) verschiebbar ist und dazu dient, durch eine Kolbenstange (67) ein Anschlagglied (68) zu verschieben, das an einer Feder (63) anliegt, die am anderen Ende an einem Betätigungsglied (33) anliegt, das durch das externe Signal (31) verstellbar ist.

7. Vorrichtung nah Anspruch 6, dadurch gekennzeichnet, dass das Betätigungsglied (33) ebenfalls an einer Feder (27) anliegt, die den Pilotschieber (21) direkt belastet.

**Revendications**

1. Procédé pour commander le rapport de transmission d'une transmission à courroie trapézoïdale à variation continue équipée d'une poulie primaire (2, 3) et d'une poulie secondaire (8, 9) ces poulies ayant des joues coniques qui peuvent être déplacées mutuellement en direction axiale au moyen respectivement d'un cylindre hydraulique primaire (5) et d'un cylindre hydraulique secondaire (10), dans lequel le rapport de transmission est commandé par des moyens de commande (21) réagissant à un signal interne qui dépend de la vitesse d'entrée de la transmission, et à un signal externe, comme par exemple la position d'une came de commande, caractérisé en ce que la pression de fluide dans le cylindre secondaire est utilisée en tant que signal supplémentaire pour agir sur la rapport de transmission.

2. Procédé selon la revendication 1, dans lequel les moyens de commande consistent en un tiroir hydraulique pilote (21), qui est chargé sur ses extrémités respectives par des forces qui dépendent des signaux interne et externe, caractérisé en ce que le signal supplémentaire charge le tiroir pilote dans une direction opposée à celle du signal externe.

3. Dispositif pour commander le rapport de transmission d'une transmission à courroie trapézoïdale à variation continue équipée d'une poulie primaire (2, 3) et d'une poulie secondaire (8, 9), ces poulies ayant des joues coniques qui peuvent être déplacées mutuellement en direction axiale au moyen, respectivement, d'un cylindre hydraulique primaire (5) et d'un cylindre hydraulique secondaire (10), dans lequel le rapport de transmission est commandé par des moyens de commande (21) qui réagissent à un signal interne dépendant de la vitesse d'entrée de la transmission et à un signal externe, comme par exemple la position d'une came de commande, caractérisé par des moyens de réglage destinés à agir sur le rapport de transmission sous la dépendance de la pression de fluide dans le cylindre secondaire (10).

4. Dispositif selon la revendication 3, caractérisé en ce que les moyens de réglage comprennent un branchement de fluide hydraulique (13, 44, 62) allant du cylindre hydraulique secondaire (10) vers un tiroir hydraulique pilote (21) pour commander le rapport de transmission, et des moyens (61) pour charger ce tiroir pilots en fonction de la pression de fluide du branchement de fluide.

5. Dispositif selon la revendication 4, caractérisé en ce que le tiroir pilote (21) commande l'introduction de fluide dans le cylindre primaire (5) et l'évacuation du fluide hors de ce cylindre, le tiroir pilote (21) est chargé sur une extrémité par une force qui dépend de la vitesse de la poulie primaire (2, 3) et sur l'autre extrémité par une force qui dépend d'un signal externe (31), et les moyens de réglage comprennent des moyens destinés à réduire cette dernière force en présence d'une pression de fluide croissante dans le cylindre secondaire (10).

6. Dispositif selon la revendication 5, caractérisé en ce que le tiroir pilote (21) est équipé d'un piston coaxial (64) qui peut être déplacé en fonction de la pression de fluide dans le cylindre secondaire (10), ce piston (64) est conçu de façon à déplacer une butée (68) par l'intermédiaire d'une tige de piston (67), et cette butée (68) repose contre un ressort (63) dont l'autre extrémité repose contre une pièce d'actionnement (33) qui peut être déplacée par le signal externe (31).

7. Dispositif selon la revendication 6, caractérisé en ce que la pièce d'actionnement (33) repose de façon similaire contre un ressort (27) qui charge directement la tiroir pilote (21).

Fig.1.

0 027 672

*Fig. 2.*